# EUROPÄISCHE PATENTSCHRIFT

(11) **EP 2 612 384 B1**
(45) Veröffentlichungstag und Bekanntmachung des Hinweises auf die Patenterteilung: **10.09.2014**
(21) Anmeldenummer: 11739002.1
(22) Anmeldetag: 01.07.2011
(51) Int. Cl.: H01M 2/12

(54) **BATTERIE MIT EINEM SCHUTZ VON NACHBARZELLEN BEIM ABBLASEN EINER BATTERIEZELLE**
BATTERY HAVING A PROTECTION FOR ADJACENT CELLS IN CASE OF BURSTING OF A BATTERY CELL
BATTERIE DOTÉE D'UNE PROTECTION POUR CELLULES ADJACENTES LORS DE L'ÉVACUATION D'UNE CELLULE DE BATTERIE

(30) Priorität: 31.08.2010 DE 102010039976
(43) Veröffentlichungstag der Anmeldung: 10.07.2013
(73) Patentinhaber: Samsung SDI Co., Ltd., Gyeonggi-do (KR); Robert Bosch GmbH, 70442 Stuttgart (DE)
(72) Erfinder: REITZLE, Alexander, 89231 Neu-Ulm (DE); ZIMMERMANN, Ulrich, 74394 Hessigheim (DE)
(74) Vertreter: Bee, Joachim
(86) Internationale Anmeldenummer: PCT/EP2011/061094
(87) Internationale Veröffentlichungsnummer: WO 2012/028356

(56) Entgegenhaltungen:
- EP-A1- 1 052 709
- EP-A1- 2 077 592
- WO-A1-2006/108529
- WO-A1-2010/067602
- JP-A- 2008 262 864
- US-A1- 2005 255 379
- US-B1- 6 444 348

## Beschreibung

Die vorliegende Erfindung betrifft eine Batterie, die derart ausgeführt ist, dass benachbarte Batteriezellen vor den schädlichen Einflüssen der beim Abblasen einer Batteriezelle freigesetzten Gase geschützt sind.

### Stand der Technik

Batteriezellen, die üblicherweise in Batterien verwendet werden, insbesondere in Lithium-Ionen Batterien, weisen ein Sicherheits- oder Abblasventil auf, welches bei übermäßiger Druckentwicklung innerhalb der Batteriezelle, z. B. durch Überhitzen und Verdampfen des Elektrolyten, öffnet und Material, meist in Form von Gasen, aus der Zelle entweichen lässt. Hierdurch wird eine Explosion des Batteriezellkörpers vermieden. Die beim so genannten Abblasen einer Batteriezelle freigesetzten Gase werden über ein Ableitungsrohrsystem aus dem Batteriegehäuse abgeleitet, um einen Kontakt der teilweise hochreaktiven Gase mit anderen Komponenten der Batterie zu verhindern. Dazu sind meist alle Batteriezellen einer Batterie an ein gemeinsames Ableitungsrohrsystem angeschlossen. Eine solche Batterie gemäß des Standes der Technik wird in WO 2006 / 108 529 A1 offenbart.

Erfolgt nun bei einer Batteriezelle einer Batterie ein Abblasen, so gelangen die freigesetzten Gase zunächst in das Ableitungsrohrsystem der Batterie und können von dort mit allen weiteren, an das Ableitungsrohrsystem der Batterie angeschlossenen Batteriezellen in Kontakt treten und diese, an sich unbeteiligten Batteriezellen verunreinigen und/oder beschädigen. Somit müssen nach einem Abblasen auch nur einer einzigen Batteriezelle alle Batteriezellen und das Ableitungsrohrsystem einer Batterie ausgetauscht werden. Es entsteht ein hoher Reparaturaufwand und damit verbunden hohe Kosten.

### Offenbarung der Erfindung

Erfindungsgemäß wird eine Batterie gemäß Anspruch 1 zur Verfügung gestellt.

Die erfindungsgemäße Batterie hat den Vorteil, dass die beim Abblasen einer Batteriezelle der Batterie nicht direkt betroffenen Bestandteile der Batterie vor einem Kontakt mit den freigesetzten Gasen geschützt werden. Der Kontakt von beim Abblasen in das Ableitungsrohrsystem freigesetzten Gasen mit anderen, nicht-abgeblasenen Batteriezellen wird durch die Schutzfolie unterbunden. Es kommt nicht zur Verschmutzung oder Beeinträchtigung der anderen, nicht betroffenen Batteriezellen der Batterie. Die Schutzfolie kann einfach entfernt und ersetzt werden. Damit kann der Reparaturaufwand auf das gezielte Ersetzen der abgeblasenen Batteriezelle(n) der Batterie und der Schutzfolie beschränkt werden, die anderen Batteriezellen der Batterie müssen nicht ausgetauscht oder gereinigt werden. Damit wird auch die Menge an gegebenenfalls kostenpflichtig zu entsorgendem Abfall beschränkt, der beim Beseitigen der Folgen des Abblasens einer Batteriezelle einer Batterie anfällt. Dies ist insbesondere im Fall von Lithium-Ionen-Batterien und dort besonders bei hochkapazitiven Lithium-Ionen-Batterien für den Einsatz im Kraftfahrzeugbereich von großem Nutzen.

Die erfindungsgemäße Batterie umfasst eine Mehrzahl von in einem gemeinsamen Gehäuse angeordneten Batteriezellen, die bevorzugt in geeigneter Weise verschaltet sind. Die erfindungsgemäße Batterie weist immer mehrere Batteriezellen auf, die zu einer funktionalen Einheit zusammengefasst sind. Die Batterie kann mehrere einzelne Batteriezellen umfassen oder ein oder mehrere Batteriemodule, wobei die Module jeweils mehrere Batteriezellen aufweisen, die in geeigneter Weise verbunden vorliegen. Dazu können die einzelnen Batteriezellen der Batterie derart elektrisch leitend miteinander verbunden vorliegen, dass diese zu gewünschten Batteriemodul- oder Batteriearchitekturen arrangiert vorliegen.

Unter einer Batteriezelle wird dabei ein elektrochemischer Energiespeicher verstanden, der eine Energie mittels elektrochemischer Prozesse speichern und bei Bedarf wieder bereitstellen kann. Grundsätzlich können in der erfindungsgemäßen Batterie Batteriezellen jedes Akkumulator- oder Batteriezelltyps verwendet werden. Bevorzugt umfasst die Batterie Batteriezellen vom Typ der Lithium-Ionen-Zellen, insbesondere vom Typ Li-Ion-Lithium-Ionen-Akku, LiPo-Lithium-Polymer-Akku, LiFe-Lithium-Metall-Akku, Li-Mn-Lithium-Mangan-Akku, LiFePO₄-Lithium-Eisen-Phosphat-Akkumulator, LiTi- Lithium-Titanat-Akku.

Bevorzugt handelt es sich bei der erfindungsgemäßen Batterie um eine Lithium-Ionen-Batterie, insbesondere um eine hochkapazitive Lithium-Ionen-Batterie, besonders bevorzugt um eine Batterie, z. B. eine Lithium-Ionen-Batterie, mit einer nominalen Kapazität von ≥ 2Ah, bevorzugt von ≥ 3Ah.

Die erfindungsgemäße Batterie kann zusätzliche Komponenten aufweisen, z. B. ein Batteriemanagementsystem (BMS) zur Steuerung oder Regelung des Batterieverhaltens.

Die erfindungsgemäße Batterie weist ein gemeinsames Gehäuse auf, in dem alle Batteriezellen oder -module der Batterie angeordnet sind. Unter dem Begriff "Gehäuse" ist dabei eine Vorrichtung zu verstehen, die einen Innenraum aufweist, der geeignet ist, eine Mehrzahl von Batteriezellen aufzunehmen. Ein Gehäuse kann dabei in einer oder zwei Richtungen dauerhaft oder vorübergehend gegenüber der Umwelt offen sein. Bevorzugt grenzt das Gehäuse die enthaltenen Batteriezellen gegenüber der Umgebung nach allen Richtungen hin vollständig ab, wobei das Gehäuse verschließbare Zugänge, wie z. B. Türen oder Deckel aufweisen kann. Unter einem Gehäuse kann nicht der unmittelbare Zellmantel verstanden werden, der die elektrochemischen Bestandteile einer einzelnen Zelle unmittelbar von der Umwelt trennt. Bevorzugt kann das Gehäuse aus einem Material gefertigt sein, welches ein Metall, ein Metallblech oder eine Keramik umfasst oder daraus besteht. Besonders bevorzugt kann das Gehäuse aus einem Material gefertigt sein, welches Aluminium aufweist oder daraus besteht.

In der erfindungsgemäßen Batterie weist jede Batteriezelle mindestens ein Abblasventil auf. Unter einem Abblasventil wird ein Ventil verstanden, welches während des Normalbetriebes der Batterie geschlossen ist und den Innenraum einer Batteriezelle gegen die Umwelt abschließt. Bei Überschreitung eines bestimmten Innendrucks in der Batteriezelle öffnet sich das Abblasventil und Material kann aus dem Zellinneren freigesetzt werden. Das freigesetzte Material ist in der Regel gasförmig. Bei dem Abblasventil handelt es sich also um ein Sicherheitsventil, das während des Regelbetriebs der Batterie geschlossen vorliegt und lediglich in Stresssituationen öffnet, um beispielsweise eine Explosion der Batteriezelle zu verhindern. Dabei kann das Abblasventil als Überdruckventil, beispielsweise als Berstventil oder Berstscheibe ausgebildet sein.

Um die aus einem oder mehreren Abblasventilen der Batteriezellen freigesetzten Gase aus dem Gehäuse der Batterie abzuführen, weist die erfindungsgemäße Batterie ein Ableitungsrohrsystem auf. Dieses Ableitungsrohrsystem verbindet die Abblasventile der Batteriezellen derart gasdicht und leitend mit einem Auslass aus dem Gehäuse, dass darüber Gas, welches beim Abblasen der Batteriezellen freigesetzt wird, über die Abblasventile an das Ableitungsrohrsystem überführt und dann aus dem Gehäuse abgeleitet werden kann. Dazu weist das Ableitungsrohrsystem eine Mehrzahl von separaten Anschlüssen auf, die dazu dienen, über die Abblasventile freigesetzte Gase direkt von den Abblasventilen aufzunehmen und einer gemeinsamen Ableitungsführung zuzuführen, über die die freigesetzten Gase aus dem Gehäuse abgeleitet werden. Ein separater Anschluss weist zwei gegenüberliegende Enden auf, wobei das eine Ende über einem Abblasventil angebracht und darüber gasdicht und -leitend mit einer Batteriezelle verbunden ist, so dass aus dem Abblasventil freigesetztes Gas unmittelbar in den separaten Anschluss übertritt. Das andere Ende ist gasdicht und -leitend mit der gemeinsamen Ableitungsführung verbunden, so dass über den separaten Anschluss aufgenommenes Gas der gemeinsamen Ableitungsführung zuführbar ist und darüber aus dem Gehäuse der Batterie geleitet werden kann. Das Ableitungsrohrsystem kann für jede Batteriezelle oder sogar für jedes Abblasventil einen eigenen separaten Anschluss vorsehen oder ein separater Anschluß kann derart ausgebildet und angeordnet sein, dass das freigesetzte Gas mehrerer Batteriezellen von einem einzigen separaten Anschluss aufgenommen wird. Bevorzugt münden alle separaten Anschlüsse der erfindungsgemäßen Batterie bevorzugt in einer einzigen gemeinsamen Ableitungsführung. Das Ableitungsrohrsystem der erfindungsgemäßen Batterie kann auch mehr als eine gemeinsame Ableitungsführung aufweisen, wobei ein Teil der separaten Anschlüsse in eine erste gemeinsame Ableitungsführung und ein anderer Teil der separaten Anschlüsse in eine zweite gemeinsame Ableitungsführung münden.

Die erfindungsgemäße Batterie zeichnet sich dadurch aus, dass zwischen den Abblasventilen der Batteriezellen und den separaten Anschlüssen des Ableitungsrohrsystems eine Schutzfolie angeordnet ist. Diese Schutzfolie ist dabei derart ausgeführt und angeordnet, dass dadurch ein unmittelbarer Kontakt der Batteriezellen mit im Ableitungsrohrsystem befindlichen Gasen im Wesentlichen unterbunden ist. Dadurch wird erreicht, dass durch ein Abblasventil einer Batteriezelle in das Ableitungsrohrsystem freigesetzte Gase nicht in der Lage sind, Bestandteile der anderen, nicht-abgeblasenen Batteriezellen der Batterie zu verunreinigen oder zu beschädigen. Die freigesetzten Gase verbleiben im Ableitungsrohrsystem und können darüber aus dem Gehäuse entweichen, ohne die anderen Batteriezellen zu beeinträchtigen.

Bevorzugt weist die erfindungsgemäße Batterie zwischen jedem Batteriemodul, jeder Gruppe von Batteriezellen, jeder Batteriezelle und/oder jedem Abblasventil und dem entsprechenden damit gasdicht verbundenen separaten Anschluss des Ableitungsrohrsystems eine eigene, separate Schutzfolie auf. Der Vorteil dieser Ausführung liegt insbesondere darin, dass nach dem Abblasen einer Batteriezelle lediglich solche Schutzfolien ersetzt werden müssen, die tatsächlich verunreinigt oder beeinträchtigt wurden.

Die Schutzfolie ist bevorzugt derart angeordnet, dass die Schutzfolie auf einer Oberfläche der Batteriezelle aufliegt und diese im Wesentlichen gasdicht von im Ableitungsrohrsystem befindlichen Gasen trennt. Dabei kann die Schutzfolie insbesondere im Wesentlichen vollständig auf einer Oberfläche der Batteriezelle aufliegen, die von der entsprechenden separaten Aufnahme des Ableitungsrohrsystems besetzt wird. Der gasdichte Abschluss der Schutzfolie mit der separaten Aufnahme kann beispielsweise dadurch realisiert werden, dass die Schutzfolie durch den Ansatz des separaten Anschlusses des Ableitungsrohrsystems an die Oberfläche der Batteriezelle gedrückt vorliegt. Dabei wird der Anpressdruck so gewählt, dass ein im Wesentlichen gasdichter Abschluss erreicht wird. Dadurch, dass die Schutzfolie auf einer Oberfläche der Batteriezelle aufliegt, kann ein Druckstoß im Ableitungsrohrsystem, der beispielsweise durch das Abblasen einer Batteriezelle der Batterie hervorgerufen wird, nicht dazu führen, dass die Schutzfolie über den anderen nicht-abgeblasenen Batteriezellen der Batterie aufreißt oder beschädigt wird.

Die Schutzfolie ist so ausgeführt und dimensioniert, dass sie die Abblasventile der Batteriezellen jeweils abdeckt. Die Schutzfolie weist eine Dicke auf, die ausreicht, um einen im Wesentlichen gasdichten Abschluss mit dem entsprechenden separaten Anschluss zu ermöglichen und die gleichzeitig sicherstellt, dass die Schutzfolie beim Abblasen einer Batteriezelle über deren Abblasventil aufreißt und einen Durchtritt der freigesetzten Gase aus der jeweiligen Batteriezelle über das Abblasventil in das Ableitungsrohrsystem erlaubt. Die Schutzfolie ist bevorzugt aus einem Material gefertigt, welches im Wesentlichen beständig ist gegenüber der, beim Abblasen einer Batteriezelle in das Ableitungsrohr freigesetzten, Gase. Besonders bevorzugt enthält oder besteht die Schutzfolie aus Polytetrafluorethylen (PTFE, oder auch Polytetrafluorethen oder Teflon® genannt).

Zusätzlich weist die erfindungsgemäße Batterie weitere Mittel auf, um nicht-abgeblasene Batteriezellen zu schützen. So sind im Ableitungsrohrsystem zusätzlich ein oder mehrere Ventile angeordnet. Diese zusätzlichen Ventile sind derart ausgeführt und angeordnet, dass beim Abblasen eines oder mehrerer Abblasventile die freigesetzten Gase im Ableitungsrohrsystem gerichtet von den beteiligten Batteriezellen in Richtung des Auslasses aus dem Gehäuse transportiert werden. Dabei wird der Gasstrom durch geeignete Ventile und geeignete Anordnung der Ventile derart geleitet, dass unbeteiligte, nicht-abgeblasene Batteriezellen mit dem im Ableitungsrohrsystem befindlichen freigesetzten Gas im Wesentlichen nicht in Kontakt kommen. Die Ventile versperren den freigesetzten Gasen die Bewegung in Richtung der unbeteiligten Batteriezellen, während die Bewegung der freigesetzten Gase durch das Ableitungsrohrsystem in Richtung des Auslasses aus dem Gehäuse der erfindungsgemäßen Batterie ermöglicht ist. Dazu können diese zusätzlichen Ventile als Wegeventile ausgebildet sein, bevorzugt als 2/2-Wegeventile, die lediglich den Durchtritt von Gasen in einer Richtung erlauben und in entgegengesetzter Richtung im Wesentlichen gasdicht sind. Ein solches zusätzliches Ventil kann beispielsweise als Schnabelventil ausgeführt sein. Dabei können ein, mehrere oder alle separaten Anschlüsse der erfindungsgemäßen Batterie ein solches zusätzliches Ventil aufweisen. Alternativ oder zusätzlich kann auch die gemeinsame Ableitungsführung des Ableitungsrohrsystems ein oder mehrere solcher zusätzlicher Ventile aufweisen.

Die Rohrführung im Ableitungsrohrsystem ist bevorzugt derart gestaltet, dass der Druckstoß beim Abblasen einer Batteriezelle immer in Richtung eines Auslasses aus dem Gehäuse geleitet wird. Hierdurch werden der Druck auf die zusätzlichen Ventile und damit die Anforderungen an deren Dichtheit reduziert.

Die vorliegende Erfindung umfasst auch ein Kraftfahrzeug, welches eine erfindungsgemäße Batterie enthält. Dabei kommt es nicht darauf an, das Kraftfahrzeug und Batterie eine bauliche Einheit bilden, sondern dass Kraftfahrzeug und erfindungsgemäße Batterie derart funktional in Kontakt stehen, dass die Batterie ihre Funktion während des Betriebs des Kraftfahrzeugs erfüllen kann. Dabei sind unter dem Begriff "Kraftfahrzeug" alle angetriebenen Fahrzeuge zu verstehen, die eine Batterie zur Energieversorgung von mindestens einer Komponente des Kraftfahrzeugs aufweisen, unabhängig davon welchen Antrieb diese Kraftfahrzeuge aufweisen. Insbesondere umfasst der Begriff "Kraftfahrzeug" elektrische Hybridfahrzeuge (HEV), Plug-In-Hybridfahrzeuge (PHEV), Elektrofahrzeuge (EV), Brennstoffzellenfahrzeuge, sowie alle Fahrzeuge, die eine Batterie zur mindestens teilweisen Versorgung mit elektrischer Energie einsetzen.

### Zeichnungen

Ausführungsbeispiele der Erfindung werden anhand der Zeichnungen und der nachfolgenden Beschreibung näher erläutert. Es zeigen:
Figur 1 eine schematische Darstellung einer Ausführungsform einer Batterie mit einer Schutzfolie, wobei in Figur 1 eine Seitenansicht dargestellt ist,
Figur 2 eine schematische Darstellung einer Ausführungsform einer Batterie mit einer Schutzfolie, wobei in Figur 2 eine Draufsicht dargestellt ist, und
Figur 3 eine schematische Darstellung einer ersten Ausführungsform der erfindungsgemäßen Batterie, wobei im Ableitungsrohrsystem zusätzliche Ventile angeordnet sind.

### Ausführungsformen der Erfindung

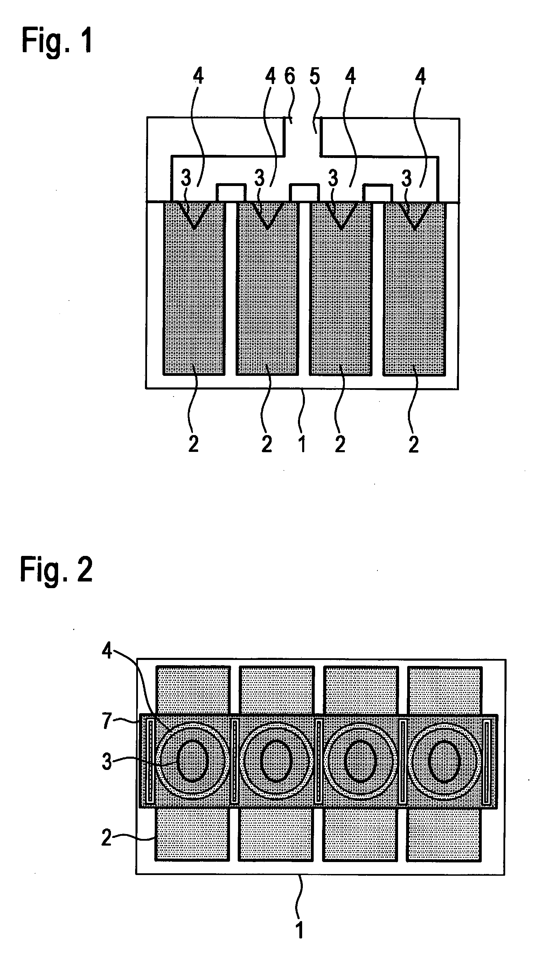

In den Figuren 1 und 2 ist eine Batterie schematisch dargestellt. In Figur 1 ist die Batterie in einer Seitenansicht dargestellt, während Figur 2 dieselbe Ausführungsform in einer Draufsicht zeigt. Im Gehäuse 1 sind eine Mehrzahl von Batteriezellen 2 angeordnet, wobei jede Batteriezelle 2 mindestens ein Abblasventil 3 aufweist. Über den Abblasventilen 3 der Batteriezellen 2 sind jeweils separate Anschlüsse 4 angebracht, die in der Lage sind, beim Abblasen der Batteriezellen 2 durch die jeweiligen Abblasventile 3 freigesetzte Gase aufzunehmen und der gemeinsamen Ableitungsführung 5 des Ableitungsrohrsystems zuzuleiten. Über die gemeinsame Ableitungsführung 5 des Ableitungsrohrsystems können freigesetzte Gase einem Auslass 6 im Gehäuse 1 zugeführt werden und darüber aus dem Batterieinneren entfernt werden. Die Batterie zeichnet sich dadurch aus, dass zwischen den Abblasventilen 3 der Batteriezellen 2 und den jeweiligen separaten Anschlüssen 4 des Ableitungsrohrsystems eine Schutzfolie 7 angeordnet ist.

Diese Schutzfolie 7 unterbindet einen direkten Kontakt der Abblasventile 3 mit im Ableitungsrohrsystem befindlichen Gasen und schützt somit nicht-abgeblasene Batteriezellen 2 im Falle des Abblasens einer oder mehrerer Batteriezellen der erfindungsgemäßen Batterie.

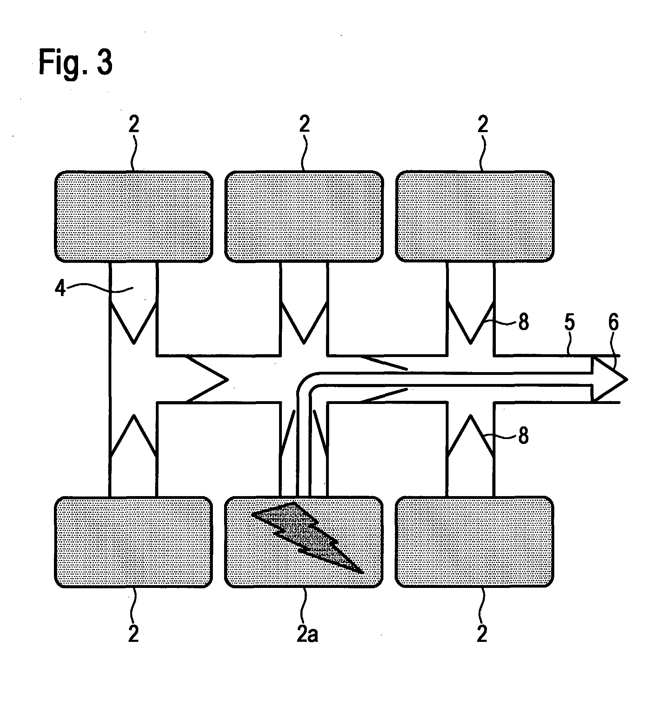

In Figur 3 ist eine erfindungsgemäße Weiterentwicklung der Batterie aus den Figuren 1 und 2 gezeigt, wobei die Batterie nun zusätzlich Ventile 8 aufweist, die derart im Ableitungsrohrsystem angeordnet sind, dass das beim Abblasen des Abblasventils einer Batteriezelle 2a freigesetzte Gas gerichtet (siehe Pfeil) in Richtung des Auslasses 6 aus dem Gehäuse 1 der erfindungsgemäßen Batterie geführt wird und dabei im Wesentlichen nicht mit einer Oberfläche von anderen, nicht-abgeblasenen Batteriezellen 2 der Batterie in Kontakt kommt. Durch die Verwendung von zwei unabhängigen Systemen wird die Wahrscheinlichkeit einer Kontamination von unbeteiligten Batteriezellen 2 mit beim Abblasen einer Batteriezelle 2a freigesetzten Gasen deutlich reduziert.

## Patentansprüche

1. Batterie umfassend:
ein Gehäuse (1);
eine Mehrzahl von in dem Gehäuse (1) angeordneten Batteriezellen (2),
wobei jede Batteriezelle (2) mindestens ein Abblasventil (3) aufweist; und ein Ableitungsrohrsystem zum Abführen von aus einem, mehreren oder allen Abblasventilen (3) der Batteriezellen (2) freigesetzten Gasen, wobei das Ableitungsrohrsystem eine Mehrzahl von separaten Anschlüssen (4) zur Aufnahme der freigesetzten Gase aufweist sowie eine gemeinsame Ableitungsführung (5), in die die separaten Anschlüsse (4) münden und über die die freigesetzten Gase aus dem Gehäuse (1) abführbar sind,
wobei zwischen den Abblasventilen (3) der Batteriezellen (2) und den separaten Anschlüssen (4) des Ableitungsrohrsystems eine Schutzfolie (7) angeordnet ist, so dass ein unmittelbarer Kontakt der Batteriezellen (2) mit im Ableitungsrohrsystem befindlichen Gasen unterbunden ist, wobei die Schutzfolie (7) derart ausgeführt ist, dass diese beim Abblasen einer Batteriezelle (2) über deren Abblasventil (3) aufreißt;
**dadurch gekennzeichnet, dass**
in jedem separaten Anschluß (4) des Ableitungsrohrsystems ein zusätzliches Ventil (8) derart ausgeführt und angeordnet ist, dass das beim Abblasen eines Abblasventils (3) einer Batteriezelle (2) in das Ableitungsrohrsystem freigesetzte Gas nicht mit einer Oberfläche der anderen, nicht-abgeblasenen Batteriezellen (2) der Batterie kontaktierbar ist und gerichtet in Richtung eines Auslasses (6) aus dem Gehäuse (1) transportiert wird.

2. Batterie nach Anspruch 1, wobei es sich um eine Lithium-Ionen-Batterie handelt.

3. Batterie nach einem der vorhergehenden Ansprüche, wobei das Ableitungsrohrsystem für jede Batteriezelle (2) einen separaten Anschluss (4) aufweist.

4. Batterie nach Anspruch 3, wobei zwischen jeder Batteriezelle (2) und dem entsprechenden separaten Anschluss (4) des Ableitungsrohrsystems jeweils eine separate Schutzfolie (7) angeordnet ist.

5. Batterie nach einem der vorhergehenden Ansprüche, wobei die Schutzfolie (7) auf einer Oberfläche der Batteriezelle (2) aufliegt.

6. Batterie nach Anspruch 5, wobei die Schutzfolie (7) durch einen separaten Anschluss (4) des Ableitungsrohrsystems an die Oberfläche der Batteriezelle (2) gedrückt vorliegt.

7. Batterie nach einem der vorhergehenden Ansprüche, wobei die Schutzfolie (7) beständig ist gegen die beim Abblasen einer Batteriezelle (2) in das Ableitungsrohrsystem freigesetzten Gase.

8. Batterie nach einem der vorhergehenden Ansprüche, wobei die Schutzfolie (7) Polytetrafluorethylen enthält oder daraus besteht.

9. Batterie nach einem der vorhergehenden Ansprüche, wobei die gemeinsame Ableitungsführung (5) des Ableitungsrohrsystems ein oder mehrere zusätzliche Ventile (8) aufweist.

10. Batterie nach einem der vorhergehenden Ansprüche, wobei die zusätzlichen Ventile (8) als Wegeventile ausgebildet sind.

11. Kraftfahrzeug enthaltend eine Batterie nach einem der Ansprüche 1 bis 10.

## Claims

1. Battery comprising a housing (1); a plurality of battery cells (2) arranged in the housing (1), wherein each battery cell (2) has at least one blowoff valve (3); and a discharge tube system for discharging gases released from one, a plurality of or all the blowoff valves (3) of the battery cells (2), wherein the discharge tube system has a plurality of separate connections (4) for receiving the gases released and a common discharge conduit (5), into which the separate connections (4) open and via which the gases released can be discharged from the housing (1), wherein a protective film (7) is arranged between the blowoff valves (3) of the battery cells (2) and the separate connections (4) of the discharge tube system, thus preventing direct contact between the battery cells (2) and gases in the discharge tube system, wherein the protective film (7) is embodied in such a way that it tears when a battery cell (2) is relieved via the blowoff valve (3) thereof, **characterized in that** an additional valve (8) is embodied and arranged in each separate connection (4) of the discharge tube system in such a way that the gas released into the discharge tube system when a blowoff valve (3) of one battery cell (2) is relieved cannot come into contact with a surface of the other, unrelieved battery cells (2) of the battery and is carried directionally out of the housing (1) toward an outlet (6).

2. Battery according to Claim 1, wherein the battery is a lithium-ion battery.

3. Battery according to one of the preceding claims, wherein the discharge tube system has a separate connection (4) for each battery cell (2).

4. Battery according to Claim 3, wherein a separate protective film (7) is arranged between each battery cell (2) and the corresponding separate connection (4) of the discharge tube system.

5. Battery according to one of the preceding claims, wherein the protective film (7) rests on a surface of the battery cell (2).

6. Battery according to Claim 5, wherein the protective film (7) is pressed against the surface of the battery cell (2) by a separate connection (4) of the discharge tube system.

7. Battery according to one of the preceding claims, wherein the protective film (7) is resistant to the gases released when a battery cell (2) is relieved into the discharge tube system.

8. Battery according to one of the preceding claims, wherein the protective film (7) contains polytetrafluoroethylene or is composed of the latter.

9. Battery according to one of the preceding claims, wherein the common discharge conduit (5) of the discharge tube system has one or more additional valves (8).

10. Battery according to one of the preceding claims, wherein the additional valves (8) are designed as directional control valves.

11. Motor vehicle containing a battery according to one of Claims 1 to 10.

## Revendications

1. Batterie comprenant :
un boîtier (1) ;
une pluralité de cellules de batterie (2) disposées dans le boîtier (1), chaque cellule de batterie (2) présentant au moins une soupape de purge (3) ; et
un système de tube d'évacuation pour l'évacuation de gaz libérés d'une, de plusieurs ou de toutes les soupapes de purge (3) des cellules de batterie (2), le système de tube d'évacuation présentant une pluralité de raccords séparés (4) pour recevoir les gaz libérés, ainsi qu'un guide d'évacuation commun (5), dans lequel débouchent les raccords séparés (4) et par le biais duquel les gaz libérés peuvent être évacués hors du boîtier (1), une feuille de protection (7) étant disposée entre les soupapes de purge (3) des cellules de batterie (2) et les raccords séparés (4) du système de tube d'évacuation, de telle sorte qu'un contact direct des cellules de batterie (2) avec les gaz se trouvant dans le système de tube d'évacuation soit empêché, la feuille de protection (7) étant réalisée de telle sorte qu'elle se déchire lors de la purge d'une cellule de batterie (2) par le biais de sa soupape de purge (3) ;
**caractérisée en ce que**
dans chaque raccord séparé (4) du système de tube d'évacuation est réalisée et disposée une soupape supplémentaire (8), de telle sorte que le gaz libéré lors de la purge d'une soupape de purge (3) d'une cellule de batterie (2) dans le système de tube d'évacuation ne puisse pas venir en contact avec une surface des autres cellules de batterie (2) non purgées de la batterie et soit transporté hors du boîtier (1) de manière orientée dans la direction d'une sortie (6).

2. Batterie selon la revendication 1, la batterie étant une batterie lithium-ion.

3. Batterie selon l'une quelconque des revendications précédentes, dans laquelle le système de tube d'évacuation présente un raccord séparé (4) pour chaque cellule de batterie (2).

4. Batterie selon la revendication 3, dans laquelle une feuille de protection séparée (7) est à chaque fois disposée entre chaque cellule de batterie (2) et le raccord séparé correspondant (4) du système de tube d'évacuation.

5. Batterie selon l'une quelconque des revendications précédentes, dans laquelle la feuille de protection (7) repose sur une surface de la cellule de batterie (2).

6. Batterie selon la revendication 5, dans laquelle la feuille de protection (7) est pressée par un raccord séparé (4) du système de tube d'évacuation contre la surface de la cellule de batterie (2).

7. Batterie selon l'une quelconque des revendications précédentes, dans laquelle la feuille de protection (7) est résistante aux gaz libérés dans le système de tube d'évacuation lors de la purge d'une cellule de batterie (2).

8. Batterie selon l'une quelconque des revendications précédentes, dans laquelle la feuille de protection (7) contient du polytétrafluoroéthylène ou est constituée de celui-ci.

9. Batterie selon l'une quelconque des revendications précédentes, dans laquelle le guide d'évacuation commun (5) du système de tube d'évacuation présente une ou plusieurs soupapes supplémentaires (8).

10. Batterie selon l'une quelconque des revendications précédentes, dans laquelle les soupapes supplémentaires (8) sont réalisées sous forme de soupapes à plusieurs voies.

11. Véhicule automobile contenant une batterie selon l'une quelconque des revendications 1 à 10.
